# EUROPEAN PATENT SPECIFICATION

(11) **EP 3 296 248 B1**
(45) Date of publication and mention of the grant of the patent: **08.04.2020**
(21) Application number: 17191790.9
(22) Date of filing: 19.09.2017
(51) Int. Cl.: B66D 1/14, B66D 5/14

(54) **WINCH WITH A BRAKING MECHANISM**
WINDE MIT BREMSEINRICHTUNG
UN TREUIL AVEC UN FREIN

(30) Priority: 19.09.2016 NO 20161489
(43) Date of publication of application: 21.03.2018
(73) Proprietor: SHM Solutions AS, 6422 Molde (NO)
(72) Inventor: Bøe Myklebust, Yngve, 6421 Molde (NO)
(74) Representative: Acapo AS

(56) References cited:
- EP-B1- 2 653 428
- FR-A- 1 458 645
- JP-A- H04 308 195
- US-A1- 2016 311 642

## Description

### THE FIELD OF THE INVENTION

The present invention relates to a winch with a braking mechanism in that it is comprised of:
a. one or more moving means, each comprised of first and second end;
b. one or more permanent magnet brakes with a front side, back side, a first end side, and a second end side.

The present invention further relates to a method of adjusting the braking force of a braking mechanism comprised of:
a. one or more moving means , each comprised of first and second end;
b. one or more permanent magnet brakes with a front side, back side, a first end side, and a second end side;
c. wherein:
d. the first end of the one or more moving means is connected to the one or more permanent magnet brakes at one of the sides;
e. the second end of the one or more moving means is connected to a primarily stationary component.

The present invention also relates to a use of a winch with a braking mechanism.

The present invention relates to a braking mechanism and, more particularly, for the use of a Permanent Magnet Brake (PMB) for applying braking force to a winch. Associated methods, system, devices, and uses are also presented.

### BACKGROUND

Winches are used in a wide range of applications to lift or position a load at the desired distance from a surface. Braking requirements are critical in situations where an emergency demands the quick release of the load. The winch must be able to quickly and safely lower the load in a controlled manner; a braking mechanism must be used.

This braking mechanism used is usually a friction type braking. Friction type brakes require a caliper or drum mechanism to clamp onto a pad with a high coefficient of friction. It is the friction between the surfaces that provide the force needed to slow or stop the load. While friction braking is the most common mechanism used in winch applications, there are several drawbacks. First of all, friction brakes are large and have a large number of parts. During braking operations the brakes themselves generate a lot of noise. Additionally, the brakes can release undesirable pollutants into the air. A friction brake will require frequent maintenance and repair in order to replace the braking parts as they war out. This very expensive and time consuming.

Another method that has been used is that of eddy current braking. This type of braking relies upon principles of magnetism. A metal moving though a magnetic field generates circular electric currents in the metal, called eddy currents, by Faraday's law of induction. These circular electric currents in the metal generate a magnetic field in accordance to Lenz's law. This field opposes the motion of the metal and provides a braking force.

In order to adjust the amount of braking force provided, the magnetic force of the magnet is adjusted. This done through an electromagnet where the electric current is varied depending upon the braking force required. One of the disadvantages of using an electromagnet is that it requires a lot of power to provide enough braking force on a large load. In the event that power is lost, all of the braking force must be provided by a friction brake; with no assistance provided by the eddy current brake.

An example of this principle can be seen in FR1458645A.

### TECHNICAL PROBLEM TO BE SOLVED

Safety requirements for towing during deep sea use (e.g. ISO 7365) are technically demanding. The winch is used for anchor handling and towering of deep sea loads. The braking mechanism must provide a quick-release mechanism to release the load in an emergency situation. Additionally, it is desirable that the load be under control during the process so as not to achieve terminal velocity. These braking requirements should also be met in the event that the vessel loses power; a dead ship situation.

The braking mechanism should also be able to function on minimal amounts of electric power, such as can easily be provided by a backup power supply. Economic demands require the braking mechanism need as little maintenance and repair as possible. Operation of the braking mechanism should generate the minimum amount of noise or pollution.

### SHORT SUMMARY OF THE INVENTION

Thus the braking mechanism is described by:
a. the first end of the one or more moving means is connected to the one or more permanent magnet brakes at one of the sides;
b. the second end of the one or more moving means is connected to a primarily stationary component; and
c. there is a gap between the front sides of each of the one or more permanent magnet brakes.

In accordance with the first aspect of the braking mechanism
a. the first permanent magnet brake is connected to the moving means at the first or second end side of the first permanent magnet brake ;
b. the back side of the second permanent magnet brake is connected to the front side of the foundation; and
c. the foundation is a part of the winch.

In accordance with the second aspect of the braking mechanism the first permanent magnet brake and second permanent magnet brake are aligned roughly parallel along the same axial axis.

Thus the method of the present invention accordance with the braking mechanism contains one of the following steps:
a. increasing the braking force by moving the permanent magnet brakes with respect to each other such that the overall magnetic force becomes more attractive; or
b. decreasing the braking force by moving the permanent magnet brakes with respect to each other such that the overall magnetic force becomes more repulsive.

In accordance with the first aspect of the method for the braking mechanism where the braking mechanism is further described by:
a. the first permanent magnet brake is connected to the moving means at the first or second end side;
b. the back side of the second permanent magnet brake is connected to the front side of the foundation.

Thus the braking mechanism of the present invention is described by the following:
a. a braking mechanism comprised of:
   one or more moving means , each comprised of first and second end;
   one or more permanent magnet brakes with a front side, back side, a first end side, and a second end side;
   wherein:
      the first end of the one or more moving means is connected to the one or more permanent magnet brakes at one of the sides;
      the second end of the one or more moving means is connected to a primarily stationary component;
b. an interaction strip, with a top and a bottom side, is located between the front side of the first permanent magnet brake and the front side of the second permanent magnet brake without touching either of them.

In accordance with the first aspect of the system further described by:
a. a first and a second permanent magnet brake and ;
b. a foundation with a front and a back side;
wherein;
c. the first permanent magnet brake is connected to the moving means at the first or second end side;
d. the back side of the second permanent magnet brake is connected to the front side of the foundation ; and
e. the interaction strip is located between the front side of the first permanent magnet brake and the front side of the second permanent magnet brake without touching either of them.

In accordance with the second aspect of the system further described by:
a. an interaction base with a top side, bottom side, inner side, and outer side;
   wherein:
   the top side of the interaction base is connected to the bottom side of the interaction strip;
b. a drum comprised of:
   a left and right flange that are disk shaped and comprised of an inner and outer side;
   a spindle that is cylindrical with a left end and a right end;
   wherein:
      the inner side of the left flange is connected to the left end of the spindle ;
      the inner side of the right flange connected to the right end of the spindle ;
the interaction base is connected to the outside of the left or right flange

Thus the use of the present invention is for applying a braking force by:
a. the first end of the one or more moving means is connected to the one or more permanent magnet brakes at one of the sides;
b. the second end of the one or more moving means is connected to a primarily stationary component; and
c. the interaction strip is located adjacent to, but not touching, any of the one or more permanent magnet brakes;
for applying a braking force.

In accordance with the first use of the present invention described by:
a. the first permanent magnet brake is connected to the moving means at the first or second end side;
b. the back side of the second permanent magnet brake is connected to the front side of the foundation ; and
c. the interaction strip is located between the front side of the first permanent magnet brake and the front side of the second permanent magnet brake without touching either of them;
for applying of a braking force.

In accordance with the second use of the present invention described by:
a. the first end of the one or more moving means is connected to the one or more permanent magnet brakes at one of the sides;
b. the second end of the one or more moving means is connected to a primarily stationary component; and
c. the interaction strip is located adjacent to, but not touching, any of the one or more permanent magnet brakes;
for moving the interaction strip in a linear manner.

### PURPOSES AND ADVANTAGES OF THE PRESENT INVENTION

The present invention uses permanent magnet brakes (PMB) to provide the braking force needed to control the descent speed of load on a winch. This is two braking arms on opposite sides of the surface that requires the braking force. Each braking arm is comprised of groups of permanent north and south magnets. The amount of braking force is determined by the overlap between the two arms. The present invention has several advantages over previous solutions to the technical problems discussed previously.

This system also uses eddy current braking. As such, it provides the same advantages as discussed previously: frictionless, low maintenance, few moving parts, no sound or pollution, etc. It also provides advantages over using an electromagnet in the braking mechanism.

The magnets are moved physically, not by changing the current. As such, there is a lower power requirement. This also allows the system to function better in the absence of large amounts of electrical power (e.g. when the ship loses power). It can also operate in environments where the high power requirements of an electromagnet braking mechanism for use under large loads, are not desired.

### BRIEF DESCRIPTION OF THE FIGURES

FIG 1 discloses an isometric view of a traditional winch system.
FIG 2 discloses a close up isometric view of the present invention.
FIG 3A discloses a top view of the engaged position of the present invention.
FIG 3B discloses a top view of the disengaged position of the present invention.
FIG 4 discloses a top view of an alternate embodiment of the present invention.
FIG 5 discloses a top view of an alternate embodiment of the present invention.
FIG 6 discloses a side view of a further embodiment of the present invention.
FIG 7 discloses a perspective view of a further embodiment of the present invention.

### LIST OF USED REFERENCE NUMERALS (AND ACRONYMS):

- 1: Braking Mechanism
- 11: PMB 1
- 12: PMB 2
- 13: Moving Means
- 2: Interaction Strip
- 3: Interaction Base
- 4: Foundation
- 5: Drum
- 51: Flange
- 52: Spindle
- 6: Spooling Device
- 7: Motor
- 8: Gearbox
- 9: Friction Brake
- N: North Magnet
- S: South Magnet

### DETAILED DESCRIPTION OF THE INVENTION

Using the attached drawings, the technical contents, and detailed descriptions, the present invention is described. Alternate embodiments will also be presented. The invention is directed toward a braking mechanism that uses permanent magnet brakes that are physically moved to provide the needed braking force. This is described in further detail below.

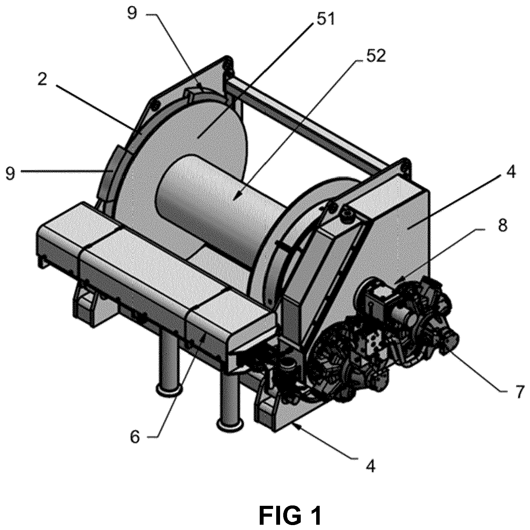

Reference is made to FIG 1. FIG 1 discloses an isometric view of a traditional winch system. A motor **7** is attached to a foundation **4.** A gearbox **8** is in contact with the motor **7.** A rod from the gear box **8** passes through the foundation **4.** The flange **51** and the spindle **52** together form the drum **5.** The aforementioned rod is fastened in some manner to the drum **5** such that the operation of the motor causes the drum to rotate and collect the cable or rope that is connected to a load. A spooling device **6** allows the cable or rope to wind onto the drum **5** without becoming twisted. During operation it can be required to stop the drum **5** from rotating. This is accomplished by the friction brake **9** and the interaction strip **2.** The interaction strip **2** is fastened to the flange **51.** The interaction strip **2** passes through the friction brake **9.** To slow down the drum **5**, the friction brakes **9** make contact with the interaction strip. By friction brake **9** it is meant a brake where physical contact between the brake and the interaction strip **2** is needed to slow or stop the rotation of the drum **5** during operation.

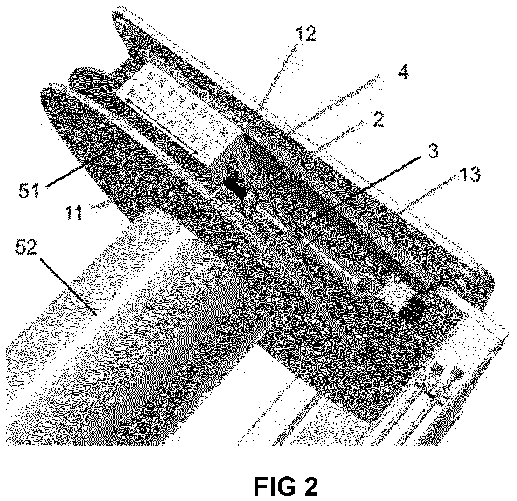

Reference is made to FIG 2. FIG 2 discloses a close up isometric view of the preferred embodiment of the present invention. The friction brake **9** is replaced by the present invention.

A moving means **13** is connected to PMB1 **11.** PMB2 **12** is fastened to the foundation **4.** An interaction strip **2** is fastened to an interaction base **3.** This is in turn fastened to the flange **51.** The flange **51** is fastened to the spindle **52.** The interaction strip **2** passes between PMB1 **11** and PMB2 **12.** There is no contact between the permanent magnet brakes (**11** and **12**) and the interaction strip **2** or each other. Each of the permanent magnet brakes (**11** and **12**) are composed of several north N and south S magnets.

During operation, the moving means **2** will move PMB1 **11** with respect to PMB2 **12.** This motion will cause the north N and south S magnets to line up in different ways. The amount of braking force will be determined by the net strength of the magnetic field. In the present invention, this is regulated by physically moving the permanent magnet brakes with respect to each other. In the preferred embodiment of the invention it is PMB1 **11** that is moved through use of a moving means **13.**

By moving means 13 it is meant things such as linear actuators, pistons, hydraulic cylinders, and other components that can physically move PMB1 with respect to PMB2. Note that this movement need not only be in a single spatial plane.

In the preferred embodiment of the present invention, the interaction base 3 and the interaction strip 2 are connected in a permanently fixed manner. This can be done through molding or casting these as a single piece. It can also be done by welding the two pieces together. However, it is possible to have these two as separate parts that are not permanently fixed together. Instead, they can be connected in way that they can be separated if needed. This could be done through the use of bolts, for example. There could be a possibility where materials of different electrical conductivity could be more advantageous for different loads.

The interaction strip 2 is preferably made of aluminum or steel. Other conductive metals could be used as well.

The distance between PMB1 **11** and PMB2 **12** will be determined by the strength of the magnets (**N** and **S**), the braking force needed, dimensions of the flange **51**, etc. One skilled in the art would be able to determine this distance.

While FIG 2 shows an interaction strip **2** between PMB1 **11** and PMB2 **12** as two separate parts, this need not be the case. Instead of using the interaction strip **2**, the flange **51** itself could be used instead. This would reduce the number of parts needed during construction of the system.

While it is preferable that PMB1 **11** and PMB2 **12** are located toward the edge of the interaction strip **2**, physical considerations could require these be moved lower with respect to the interaction base **3.**

The braking mechanism **1** is defined as being composed of one or more permanent magnet brakes and associated moving means **13.**

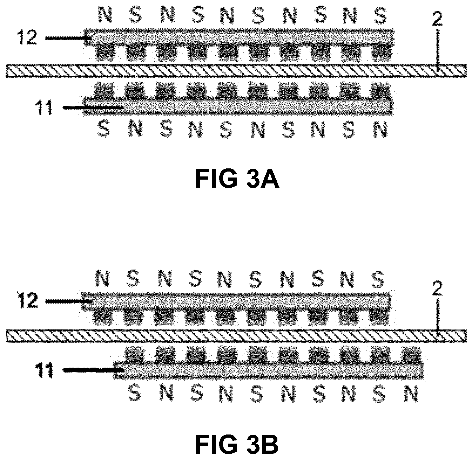

Reference is made to FIG 3A and 3B. These disclose a top view of the engaged and disengaged positions of the present invention. The braking force is provided by the aforementioned eddy currents resulting from a conductive material moving through a magnetic field. A discussion of the physics of magnetic braking was presented previously and will not be repeated here.

The braking force will be a result of the overall magnetic field (and induced currents) of the system. The magnetic field in the present invention is adjusted by adjusting to spatial position between PMB1 **11** and PMB2 **12.** The interaction strip **2** is found between PMB1 **11** and PMB2 **12.** Note that the permanent magnet brakes (**11** and **12**) are not in contact with each other or with the interaction strip **2.**

PMB1 **11** and PMB2 **12** are comprised of north **N** and south **S** magnets. When the magnets are lined up such that the overall force between PMB1 **11** and PMB2 **12** is attractive, the induced force hinders the motion of the interaction strip **2.** In this case the braking mechanism **1** is engaged. Conversely, when the magnets are arranged up such that the overall force between PMB1 **11** and PMB2 **12** is repulsive the induced force does not hinder the motion of the interaction strip **2.** In this case the braking mechanism **1** is disengaged.

The braking force can also be varied by adjusting the amount of overlap between PMB1 **11** and PMB2 **12.** The more the two motors overlap, the stronger the overall repulsive or attractive force will be. Another way to adjust the braking force is by physically adjusting the distance between the two permanent magnet brakes (PMB1 **11** and PMB2 **12**). While FIGs 3A and 3B show that the magnets line up perfectly, this if for illustration purposes. There is a continuum of possibilities in how the magnets line up.

PMB1 **11** and PMB2 **12.** Shown in FIGs 3A and 3B are shown made up of a large number of individual magnets (**N** and **S**). It could also be composed of a single magnet. Additionally FIGs 3A and 3B show that the magnets are set out in an alternating north magnet **N** next to south magnet **S.** This is only a representation and the exact layout of the magnets would be determined by one skilled in the art.

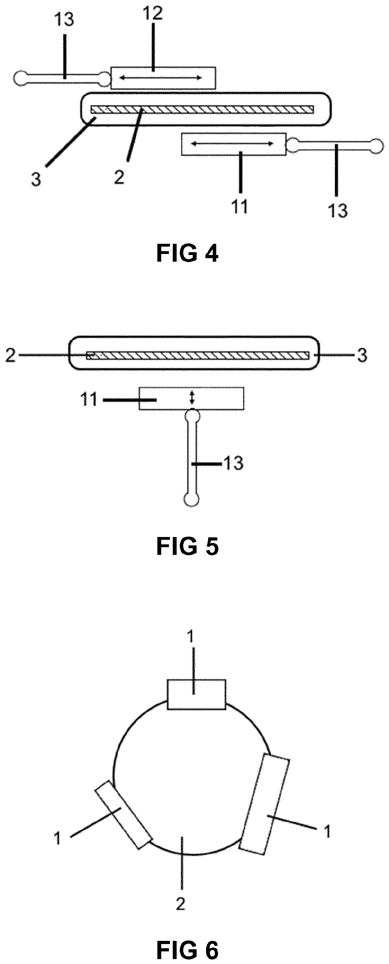

Reference is made to FIG 4. FIG 4 discloses a top view of an alternate embodiment of the present invention. In this embodiment, PMB1 **11** and PMB2 each have a moving means **13.** The interaction strip **2** is fastened to the interaction base **3.** The interaction base **2** is found between PMB1 **11** and PMB2 **12.** The moving means **13** of PMB1 **11** and PMB2 **12** operate independently, but along the same plane. The arrows located inside PMB1 **11** and PMB2 **12** are to illustrate the directions of motion.

This embodiment could be useful in the case where it was not desired for the permanent magnet brakes (PMB2 **12** in the case of FIG 4) to be mounted to the foundation **4** (not shown) or any other part of the equipment that requires the braking mechanism **1.**

There is no requirement that the motion of PMB1 **11** with respect to PMB2 **12** occur in the same plane. Different paths might be needed in the case of systems where there is not a path that the permanent magnet brakes can move in the same plane.

An alternate embodiment to the invention shown in FIG 4 is to have more than one moving means **13** connected to a single permanent magnet brake. This could be advantageous in situations where the amount of force needed to move a permanent magnet brake places undue load upon a single moving means **13.** More than one moving means can be useful if the permanent magnet brake must be moved rapidly back and forth. More than one moving means **13** can also be used in cases where two dimensional or three dimensional adjustments are required.

Reference is made to FIG 5. FIG 5 discloses a top view of an alternate embodiment of the present invention. The interaction strip **2** is fixed to interaction base **3.** PMB1 **11** is parallel to the interaction strip **2.** A movement means **13** is attached perpendicular to PMB1 11. Braking force is increased by moving PMB1 11 toward the interaction strip **2** by the movement means **3.** In this embodiment, the braking force is provided by PMB1 alone.

Reference is made to FIG 6. FIG 6 discloses a side view of a further embodiment of the present invention. In this embodiment, three braking mechanisms **1** are applied to the interaction strip **2.** This illustrates that more than one braking mechanism **1** can be provided in the case where more braking force is needed than can be provided by a single braking mechanism **1.**

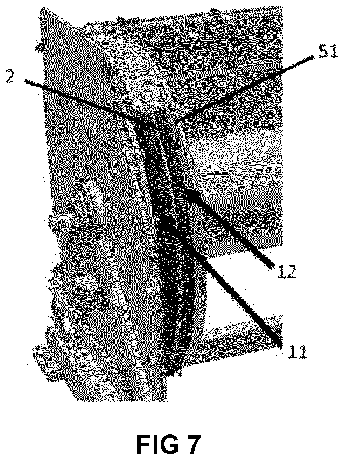

Reference is made to FIG 7. FIG 7 discloses a perspective view of a further embodiment of the present invention. In the embodiment shown in FIG 2, PBM1 **11** and PBM2 **12** are short straight segments of permanent magnets. However, this is not a limitation of the invention. In this embodiment, PBM1 **11** and PBM2 **12** are longer curved segments of north and south permanent magnets (shown as **N** and **S**). In the preferred embodiment, PBM1 **11** and PBM2 **12** are both rings that have the same radius. As with previous embodiments an interaction strip **2** is located between PBM1 **11** and PBM2 **12.** PBM2 **12** is located between the interaction strip **2** and the flange **51**, but is not attached to it. There is no physical contact between PBM1 **11**, PBM2 **12**, and the interaction strip **2.** It is the position of the magnets in PBM1 **11** with respect to PBM2 **12** that determines that braking power. Using a ring formed permanent braking magnet can increase the efficiency of this with respect to a linear shape.

While FIG 7 shows that the top of the ring shaped PBM1 **11** and PBM2 **12** are at the same height as the interaction strip **2**, this is for illustration purposes only. The relative heights of the need only be tall enough such that eddy currents can be induced in the interaction strip **2.** While the preferred embodiment is with the curved PBM1 **11** and PBM2 **12** going forming a complete ring, this is not a requirement. One or more of curved permanent braking magnet, **11** or **12**, could be used to cover the entire edge - or just a partial portion - of the interaction strip **2.** The permanent magnets are shown as very large, but this is for illustration purposes only. The size of the magnets can be adjusted by one skilled in the art for the task to be solved.

The embodiments of the invention shown in FIGs 2 through 7 are simply examples of possibilities. For example, it would be possible to combine the movement of PMB2 **12** of FIG 4 with the perpendicular movement of PMB1 **11** from FIG 5. Another example would be to use the preferred embodiment of the braking mechanism **1** as found in FIG 2 as one of the braking mechanisms disclosed in FIG **6** and to use the alternate embodiment of the braking mechanism **1** disclosed in FIG **4** for another one of the braking mechanisms **1** in FIG 6.

The braking mechanism **1** of the present invention could be combined with friction brakes **9.** This could be useful in cases where a backup type of brake is needed.

The motion of the PMB does not need to be in a straight line. In some situations it may be an advantage if it travels in an arc instead. This could be useful in cases where other components of the system prevent linear motion of the PMB.

The ends of the moving means **13** are shown as being connected to the same foundation **4.** However, it is not required that they be connected to the same component. This will be determined by the exact configuration of the components required for the specific situation. Additionally, the moving means **13** could be connected to a system of vibration dampening or load dampening instead of directly to a stationary component, such as the foundation **4.**

The drum **5** is shown in the figures as having a flange **51** on each side of a drum **52.** It is possible to have flanges **51** between these outer flanges **51.** This could be useful if more than one type of cable is needed.

Use of the braking mechanism **1** for the movement of the interaction strip **2** will now be explained. In traditional usage of a permanent magnet brake, current is passed through the motor and causes it to become magnetized according to well known principles. By using a time varying electric current (e.g. alternating current, saw tooth wave form, sine waves) at the right frequency, an interaction strip **2** can be forced to move.

A similar result would be obtained by physically moving the magnet back and forth at a certain frequency. This frequency will be different depending on load and structure of the equipment, but it is something that one skilled in the art could determine without undue experimentation. Thus the braking mechanism **1** can be used to supplement or replace the movement force generated by a traditional axel mounted motor **7** (shown in FIG 1). By moving the motor out to the edge of the drum **5**, it requires less force to rotate it.

The method for the application of braking force given by the following steps:
a) Increasing the braking force by moving the permanent magnet brakes using moving means **13** such that the net force becomes more attractive.
b) Decreasing the braking force by moving the permanent magnet brakes using movement means **13** with respect to each other such that the net forces becomes more repulsive.

The method of operating the braking mechanism as a motor is given by the following step:
a) Moving the permanent magnet brakes with respect to each other at a frequency, using moving means **13** such that an overall rotational force is achieved.

Even though the braking mechanism is described herein as a separate system, it is meant to be able to function as a part of a system that is comprised of:
a) Braking mechanism **1.**
b) Interaction strip **2.**

Optional components include:
a. Interaction base **3.**
b. Drum **5.**
c. Foundation **4.**

Please note that "step of" is not to be interpreted as "step for". Also note that "comprised of", "comprises", and "comprising" are to be interpreted as an open set.

## Claims

1. Winch with a braking mechanism comprised of:
a winch with a drum (**5**);
one or more moving means (**13**), each comprised of first and second end;
two or more permanent magnet brakes (**11**) and (**12**) with a front side, back side, a first end side, and a second end side; further comprised of one or more permanent north or south magnets arranged in a primarily alternating manner along the front side;
an interaction strip (**2**) that is made of a conductive material such that it is possible to induce an eddy current through or in the material;
wherein part of the interaction strip (**2**) is arranged between the two or more permanent magnet brakes (**11**) and (**12**) such that there is no contact between the interaction strip (**2**) and the permanent magnet brakes (**11**) and (**12**);
part of the interaction strip (**2**) is affixed directly or indirectly to the drum (**5**);
the permanent magnet brakes (**11**) and (**12**) are arranged such that there is no contact between any of them;
the first end of the one or more moving means (**13**) is connected to one or more of the permanent magnet brakes (**11**) and (**12**) at one of its sides;
**characterized in that** the winch comprises a foundation (4), and
the second end of said one or more moving means (**13**) is connected to said foundation (4) of the winch.

2. Winch with a braking mechanism in accordance to claim **1 CHARACTERIZED in that**
the first permanent magnet brake (**11**) is connected to the moving means (**13**) at the first or second end side of the first permanent magnet brake (**11**); and
the back side of the second permanent magnet brake (**12**) fixedly connected to a stationary part of the winch (**5**).

3. Winch with a braking mechanism in accordance to claim **2 CHARACTERIZED in that** the first permanent magnet brake (**11**) and second permanent magnet brake (**12**) are aligned roughly parallel to each other.

4. Winch with a braking mechanism in accordance with any of the previous claims **CHARACTERIZED in that** one or more of the permanent magnet brakes (**11**) and/or (**12**) have a ring shape.

5. Method of adjusting the braking force of a braking mechanism (**1**) in accordance with any of the previous claims
**CHARACTERIZED by** one of the following steps:
a) increasing the braking force by moving the permanent magnet brakes (**11**) and (**12**) with respect to each other such that there is a larger overlap between the positive permanent magnets on one permanent magnet brakes (**11**) and the negative permanent magnets on the other permanent magnet brake (**12**); or
b) decreasing the braking force by moving the permanent magnet brakes with respect to each other such that there is a larger overlap between the positive permanent magnets on one permanent magnet brakes (**11**) and the positive permanent magnets on the other permanent magnet brake (**12**).

6. Use of a winch with a braking mechanism in accordance with any of claims 1-4 **characterized by** applying a braking force by moving the first permanent magnet brake (11) with respect to the second (12).

7. Use of a winch with a braking mechanism in accordance with any of claims 1-4 **characterized by** wholly or partially operating the winch by moving the interaction strip (**2**) by moving one permanent magnet brake (**11**) with respect to the other permanent magnet brake (**12**) using one or more movement means (**13**).

## Patentansprüche

1. Winde mit einem Bremsmechanismus, umfassend:
eine Winde mit einer Trommel (5);
ein oder mehrere bewegliche Mittel (13), die jeweils ein erstes und ein zweites Ende umfassen;
zwei oder mehr Permanentmagnetbremsen (11) und (12) mit einer Vorderseite, einer Rückseite, einer ersten Endseite und einer zweiten Endseite; die ferner ein oder mehrere Nord- oder Süd- Permanentmagnete umfassen, die in einer hauptsächlich abwechselnden Weise entlang der Vorderseite angeordnet sind;
einen Wechselwirkungsstreifen (2), der aus einem leitfähigen Material hergestellt ist, sodass es möglich ist, einen Wirbelstrom durch das Material oder in dem Material zu induzieren;
wobei ein Teil des Wechselwirkungsstreifens (2) zwischen den zwei oder mehr Permanentmagnetbremsen (11) und (12) derart angeordnet ist, dass kein Kontakt zwischen dem Wechselwirkungsstreifen (2) und den Permanentmagnetbremsen (11) und (12) ist;
ein Teil des Wechselwirkungsstreifens (2) direkt oder indirekt an der Trommel (5) befestigt ist;
die Permanentmagnetbremsen (11) und (12) derart angeordnet sind, dass kein Kontakt zwischen beliebigen von ihnen ist;
das erste Ende des einen oder der mehreren beweglichen Mittel (13) mit einem oder mehreren der Permanentmagnetbremsen (11) und (12) an einer seiner Seiten verbunden ist;
**dadurch gekennzeichnet, dass** die Winde einen Sockel (4) umfasst und das zweite Ende des einen oder der mehreren beweglichen Mittel (13) mit dem Sockel (4) der Winde verbunden ist.

2. Winde mit einem Bremsmechanismus nach Anspruch 1, **dadurch**
**gekennzeichnet, dass** die erste Permanentmagnetbremse (11) mit dem beweglichen Mittel (13) an der ersten oder zweiten Endseite der ersten Permanentmagnetbremse (11) verbunden ist; und
die Rückseite der zweiten Permanentmagnetbremse (12) mit einem stationären Teil der Winde (5) fest verbunden ist.

3. Winde mit einem Bremsmechanismus nach Anspruch 2, **dadurch**
**gekennzeichnet, dass** die erste Permanentmagnetbremse (11) und die zweite Permanentmagnetbremse (12) in etwa parallel zueinander ausgerichtet sind.

4. Winde mit einem Bremsmechanismus nach einem der vorhergehenden Ansprüche, **dadurch gekennzeichnet, dass** eine oder mehrere der Permanentmagnetbremsen (11) und/oder (12) eine ringförmige Gestalt aufweisen.

5. Verfahren zum Einstellen der Bremskraft eines Bremsmechanismus (1) nach einem der vorhergehenden Ansprüche,
**gekennzeichnet durch** einen der folgenden Schritte:
a) Erhöhen der Bremskraft, indem die Permanentmagnetbremsen (11) und (12) in Bezug aufeinander derart bewegt werden, dass eine größere Überlagerung zwischen den positiven Permanentmagneten an einer Permanentmagnetbremse (11) und den negativen Permanentmagneten an der anderen Permanentmagnetbremse (12) ist; oder
b) Verringern der Bremskraft, indem die Permanentmagnetbremsen in Bezug aufeinander derart bewegt werden, dass eine größere Überlagerung zwischen den positiven Permanentmagneten an einer Permanentmagnetbremse (11) und den positiven Permanentmagneten an der anderen Permanentmagnetbremse (12) ist.

6. Verwendung einer Winde in einem Bremsmechanismus nach einem der Ansprüche 1 bis 4, **gekennzeichnet durch** ein Aufbringen einer Bremskraft, indem die erste Permanentmagnetbremse (11) in Bezug auf die zweite (12) bewegt wird.

7. Verwendung einer Winde mit einem Bremsmechanismus nach einem der Ansprüche 1 bis 4, **gekennzeichnet durch** ein vollständiges oder teilweises Betätigen der Winde durch ein Bewegen des Wechselwirkungsstreifens (2), indem eine Permanentmagnetbremse (11) in Bezug auf die andere Permanentmagnetbremse (12) unter Verwendung eines oder mehrerer Bewegungsmittel (13) bewegt wird.

## Revendications

1. Treuil avec un mécanisme de freinage, comprenant :
un treuil avec un tambour (5) ;
un ou plusieurs moyens de déplacement (13), comprenant chacun une première et une deuxième extrémité ;
deux ou plusieurs freins à aimant permanent (11) et (12) avec un côté avant, un côté arrière, un premier côté d'extrémité et un deuxième côté d'extrémité ; comprenant en outre un ou plusieurs aimants permanents nord ou sud agencés de manière essentiellement alternée le long du côté avant ;
une bande d'interaction (2) composée d'un matériau conducteur, de sorte qu'il est possible d'induire un courant de Foucault à travers ou dans le matériau ;
dans lequel :
une partie de la bande interactive (2) est agencée entre les deux ou plus freins à aimant permanent (11) et (12), de sorte qu'il n'y a pas de contact entre la bande interactive (2) et les freins à aimant permanent (11) et (12) ;
une partie de la bande interactive (2) est fixée de manière directe ou indirecte sur le tambour (5) ;
les freins à aimant permanent (11) et (12) sont agencés de sorte qu'il n'y a pas de contact entre un quelconque de ceux-ci ;
la première extrémité de l'un ou des plusieurs moyens de déplacement (13) est connectée à l'un ou à plusieurs des freins à aimant permanent (11) et (12) au niveau de l'un de ses côtés ;
**caractérisé en ce que** le treuil comprend une fondation (4) ; et
la deuxième extrémité dudit un ou desdits plusieurs moyens de déplacement est connectée à ladite fondation (4) du treuil.

2. Treuil avec mécanisme de freinage selon la revendication 1, **caractérisé en ce que** :
le premier frein à aimant permanent (11) est connecté au moyen de déplacement (13) au niveau du premier ou du deuxième côté d'extrémité du premier frein à aimant permanent (11) ; et
le côté arrière du deuxième frein à aimant permanent (12) est connecté de manière fixe à une partie stationnaire du treuil (5).

3. Treuil avec un mécanisme de freinage selon la revendication 2, **caractérisé en ce que** :
le premier frein à aimant permanent (11) et le deuxième frein à aimant permanent (12) sont alignés de manière sensiblement parallèle l'un à l'autre.

4. Treuil avec mécanisme de freinage selon l'une quelconque des revendications précédentes, **caractérisé en ce qu'**un ou plusieurs des freins à aimant permanent (11) et/ou (12) ont une forme annulaire.

5. Procédé d'ajustement de la force de freinage d'un mécanisme de freinage (1) selon l'une quelconque des revendications précédentes, **caractérisé par** l'étape ci-dessous :
a) accroissement de la force de freinage en déplaçant les freins à aimant permanent (11) et (12) l'un par rapport à l'autre, de sorte à établir un chevauchement plus important entre les aimants permanents positifs sur un frein à aimant permanent (11) et les aimants permanents négatifs sur l'autre frein à aimant permanent (12) ; ou
b) réduction de la force de freinage en déplaçant les freins à aimant permanent l'un par rapport à l'autre, de sorte à établir un chevauchement plus important entre les aimants permanents positifs sur l'un des freins à aimant permanent (11) et les aimants permanents positifs sur l'autre des freins à aimant permanent (12).

6. Utilisation d'un treuil avec un mécanisme de freinage selon l'une quelconque des revendications 1 à 4, **caractérisée par**:
l'application d'une force de freinage en déplaçant le premier frein à aimant permanent (11) par rapport au deuxième frein à aimant permanent (12).

7. Utilisation d'un treuil avec un mécanisme de freinage selon l'une quelconque des revendications 1 à 4, **caractérisée par**:
l'actionnement partiel ou complet du treuil en déplaçant la bande interactive (2) par déplacement d'un frein à aimant permanent (11) par rapport à l'autre frein à aimant permanent (12) par l'intermédiaire d'un ou de plusieurs moyens de déplacement (13).
